# EUROPEAN PATENT SPECIFICATION

(11) **EP 2 872 583 B1**
(45) Date of publication and mention of the grant of the patent: **04.05.2016**
(21) Application number: 12735868.7
(22) Date of filing: 13.07.2012
(51) Int. Cl.: C09J 161/28, C08G 12/38, B32B 21/13, B32B 7/12

(54) **ADHESIVE SYSTEM**
HAFTSYSTEM
SYSTÈME ADHÉSIF

(43) Date of publication of application: 20.05.2015
(73) Proprietor: Akzo Nobel Coatings International B.V., 6824 BM Arnhem (NL)
(72) Inventor: SEGERSTEDT, Eva, S-178 36 Ekerö (SE); HOMMAN LOUDIYE, Maria, S-131 53 Nacka (SE)
(74) Representative: Akzo Nobel IP Department
(86) International application number: PCT/EP2012/063805
(87) International publication number: WO 2014/008947

(56) References cited:
- WO-A1-01/70898
- WO-A1-2009/005461
- WO-A1-2010/018202
- JP-A- 2002 105 425
- JP-A- 2002 283 314

## Description

The invention relates to an adhesive system, use thereof, a method of producing a wood based product and products obtainable thereby.
Adhesive systems comprising amino resins are widely used in the production of wood based products. Examples of amino resins include urea-formaldehyde (UF), melamine-formaldehyde (MF) and melamine-urea-formaldehyde (MUF). Examples of wood based products include Laminated Beams, Japanese posts, Duo-/ trio-beams, Cross Laminated Timber and I-joists as well as non-load bearing constructions like constructive boards, shuttering boards and window frames. Further examples include composite products comprising layers glued together such as plywood, laminated flooring products and veneered products used in, e.g., furniture.
Upon curing an amino resin, formaldehyde may be released both when used in the manufacturing of wood based products and also later during use of those products. Formaldehyde emission to indoor air is a major concern for health reasons.
US 4536245 discloses a MUF resin having F/U eq molar ratio of 1.3:1 to 0.7:1 and having a low rate of formaldehyde emission when cured.
US 5681917 discloses a MUF resin having a formaldehyde to urea and melamine ratio of between about 0.5 and 1.1 and having low formaldehyde emissions.
However, using a resin with too low formaldehyde to urea ratio requires high press temperature and/or long press times in order to achieve satisfactory bonding. High temperature increases the energy consumption while long press time reduces the production capacity. Further, too high press temperature is not suitable for many kinds of products.
WO 2007/040410 discloses an adhesive system comprising a UF resin adhesive part; a hardener part comprising one or more curing agents; a polymer dispersion; and a formaldehyde scavenger comprising a combination of urea and resorcinol.
WO 2010/018202 discloses a low formaldehyde emission adhesive system comprising a first adhesive component comprising a melamine-formaldehyde type resin and a second adhesive component comprising a dispersion adhesive, a formaldehyde scavenger and an acidic compound. The preferred molar ratio F/NH₂ of the melamine type resin is 0.9-1.15.

However, although addition of significant amounts of scavengers, particularly urea, reduces the formaldehyde emissions, it has been found that longer press times and/or higher press temperatures are required.

JP 2002 283314 A and JP 2002 105425 A describe adhesive systems wherein the amount of melamine, expressed as (M/M+U)) is more than 75 %.

It is an object of the invention to provide an adhesive system comprising a melamine-urea-formaldehyde resin with low or no emissions of formaldehyde but still being efficient as a wood adhesive without requiring extremely long press time or high temperature.

One aspect of the present invention concerns an adhesive system comprising (a) a resin component comprising a melamine-urea-formaldehyde resin in which the amount of melamine expressed as M/(M+U) is from 30 to 60 wt% and the F/NH₂ molar ratio is from 0.6 to 0.79; and, (b) a hardener component comprising at least one acid, acid generating salt or acidic salt and being free from or comprising less than 15 wt% urea.

A further aspect of the invention concerns a method of producing a wood based product, comprising applying an adhesive system of the invention onto at least one surface of one or more pieces of a wooden material, joining the one or more pieces with one or more further pieces of a material and pressing the pieces together.

Still a further aspect of the invention concerns a wood based product obtainable by the method of the invention. Such a product comprises wooden material and cured adhesive.

Still a further aspect of the invention concerns use of an adhesive system of the invention for joining one or more pieces of a wooden material with one or more further pieces of a material.

The term "adhesive system" as used herein refers to a combination of components which function as and is intended to be used together as an adhesive. The components may be present in the same adhesive composition comprising all the components necessary for its function as an adhesive or in separate compositions, such as an adhesive composition (referred to herein as a resin component) and a hardener composition (referred to herein as a hardener component), functioning as an adhesive when combined. Such separate compositions may be mixed shortly before application to the surfaces to be joined or be applied separately to the surfaces. In the present invention, the resin component and the hardener component are usually kept separated and not mixed until during or shortly before use. The adhesive system of the invention is particularly useful for joining pieces of wooden materials.

The term "amino resin" as used herein refers to a condensation product of formaldehyde and at least one compound carrying -NH₂ or -NH groups. Such compounds include, for example, urea and melamine and such resins include, for example, urea-formaldehyde (UF), melamine-formaldehyde (MF) and melamine-urea-formaldehyde (MUF) resins. However, also other compounds comprising reactive nitrogen may be included at the preparation of the resins, such as NH₃ or hexamine.

Melamine-urea-formaldehyde resins, also referred to as MUF resins, may be based on a mixture of a UF resin and an MF resin prepared separately, but may also be a co-condensation product of melamine, urea and formaldehyde. MUF resins of the kinds mentioned above are commercially available at various ratios between the constituents, for example between melamine and urea and between the amine and formaldehyde.

The expression "M/(M+U)" as used herein refers to the relative amount, expressed as wt%, of melamine based on the total amount of melamine and urea in the MUF resin.

The term "F/NH₂ ratio" is commonly used in the art of amino resins for characterising the amount of formaldehyde compared to the amount of reactive nitrogen in the raw materials used for preparing the resin. The term as used herein refers to the molar ratio between formaldehyde and the sum of all nitrogen atoms except those in the ring structure of aromatic groups, such as in the ring structure of the melamine. Thus, even if written as "NH₂" most of the nitrogen in the final resin is not in the form of NH₂ and does further include also nitrogen originating from optional other reactive nitrogen containing groups in the raw materials of the resin. Further, most of the formaldehyde is reacted in the final resin, but the amount used can be determined after hydrolysing the resin. The MUF resin used in the present invention has an F/NH₂ molar ratio from 0.6 to 0.79 or from 0.65 to 0.75.

The term "dry content" as used herein refers to the content of anything in the adhesive system or a component thereof not being water. The entire adhesive system may, for example, comprise from 20 to 70 or from 30 to 60 wt% water.

The term "wooden material" as used herein refers not only to solid wood, but also to materials such as fibre-, chip-, and particleboard materials. The surfaces to be joined may be of the same or different types of materials. The pieces of wooden material can be any type and form such as chips, fibres, sheets, laminas, veneers, board products etc. The invention is particularly favourable for joining solid wood lamellas together to produce glulams or Crosswise Laminated Timber as well as joining solid wood and board material like any one of such as board of solid wood, particle board, fibre board (e.g. MDF or HDF), chip board or oriented strand board to form I-joists.

Preferably both the resin component and the hardener component are aqueous compositions. However, one or more of the components, such as the MUF resin, may also be in the form of a powder that is dispersed or dissolved in water before use.

The resin component comprises a MUF resin and may, for example, be an aqueous solution thereof. The resin component, including any water therein, may, for example, comprise from 50 to 90 wt% or from 60 to 80 wt% of MUF resin. The resin component may further comprise other additives commonly used in the art, for example in a total amount from 0 to 10 wt% or from 0.1 to 5 wt%. Examples of such additives include thickeners, defoamers, fillers, biocides etc.

The hardener component comprises at least one acid, acid generating salt or acidic salt and may, for example, be an aqueous solution thereof. Examples of acids include organic acids like carboxylic acids as well as inorganic acids. Specific examples of acids include formic acid, acetic acid, maleic acid, citric acid, glycolic acid, lactic acid, malic acid, tartaric acid, phosphoric acid, hydrochloric acid, sulphamic acid, sulphonic acid and paratoluene sulphonic acid. Examples of acid generating salts include ammonium salts such as ammonium chloride, ammonium sulphate and ammonium phosphate, as well as organic salts like ethylene diamine salts. Examples of acidic salts include metal salts such as acidic aluminium, zirconium, zink, magnesium and calcium salts, for example those that are water soluble of chloride, nitrate and sulphate, like aluminium chloride, aluminium nitrate and aluminium sulphate. The concentration of acid, acid generating salt or acidic salt in the hardener component may, for example, be from 0.1 to 25 wt% particularly from 1 to 20 wt% or from 5 to 20 wt%. A particularly preferred hardener component comprises at least one carboxylic acid, particularly formic acid.

The hardener component is free from or comprises less than 15 wt% urea. It is particularly preferred that the amount of urea in the hardener component is less than 10 wt%, particularly less than 5 wt% or less than 1 wt%.

The hardener component is preferably also free from or comprises less than 15 wt% of formaldehyde scavengers other than urea. Such formaldehyde scavengers include amino-compounds such as thiourea or amines (incl. primary and secondary amines), ammonia, ammonium salts or hydroxy compounds such as hydroxy functional aromatic compounds like phenols, resorcinol or tannins.

It is particularly preferred that the amount of such formaldehyde scavengers in the hardener component is less than 10 wt% particularly less than 5 wt% or less than 1 wt%.

The hardener component may further comprise at least one thickener, such as at least one of polyvinyl pyrolidone or polyvinyl alcohol (PVOH), the latter being particularly preferred. The amount of the at least one thickener may, for example, be from 0 to 25 wt%, particularly from 1 to 20 wt% or from 2 to 15 wt% based on the entire composition of the hardener component.

The hardener component may optionally further comprise dispersed polymer particles, for example originating from an aqueous polymer dispersion mixed with the other ingredients when preparing the hardener component. The amount of polymer particles in the hardener component may, for example, be from 0 to 50 wt% or 10 to 30 wt% based on the entire composition of the hardener component. The polymer may, for example, be at least one synthetic polymer, such as homo- and co-polymers made from ethylenically unsaturated monomers like vinyl monomers. Examples of polymers include homo- or co-polymers of vinylacetate, homo or co-polymers of esters of (meth)acrylic acid, homo-or co-polymers of (meth)acrylamide, homo- or co-polymers of (meth)acrylic acid or homo- or co-polymers of vinyl alcohol. Further examples include and styrene-butadiene co-polymers. More specific examples of polymers include polyvinyl acetate (PVAc), polyethylene vinylacetate (EVA), co-polymers of vinylchloride and vinylacetate or ethylene vinylacetate, polyethylene-acrylic acid (PEAA), ethylene methyl acrylate copolymer (EMA), polyethyl methacrylate (PEMA), co-polymers of vinylacetate and other esters, such as alkyl esters of (meth)acrylic acid, styrene acrylate co-polymers, and styrene-butadiene rubber (SBR). Further examples of polymers include polyurethane. Particularly useful polymers include homo or co-polymers of vinyl acetate, such as functionalised or non-functionalised PVAc. Many polymers useful for the invention are commercially available as aqueous dispersions or solutions. The polymers can also be prepared by general methods known to those skilled in the art.

The term "(meth)acryl" as used herein refers to both acryl and methacryl equally. For example, (meth)acrylate refers to any of acrylate or methacrylate while (meth)acrylic acid refers to any of acrylic acid or methacrylic acid.

In some embodiments the polymer, e.g. PVAc, is functionalised, i.e. it comprises functional groups. Such functional groups include, for example, at least one of carboxylic acid, anhydrides thereof, N-alkylol, N-alkoxymethyl or glycidyl groups. Such groups may, for example be incorporated into the polymer by copolymerising at least one monomer comprising at least one such group with the other monomers. Examples of such monomers include acrylic acid, methacrylic acid, crotonic acid, isocrotonic acid, itaconic acid, itaconic anhydride, maleic acid, maleic anhydride, fumaric acid N-alkylol (meth)acrylamides such as N-methylol (meth)acrylamide and N-(alkoxymethyl) (meth)acrylates such as N-(butoxymethyl) (meth)acrylamide or N-(iso-butoxymethyl) (meth)acrylamide. However, the polymer may also be free from such monomers and particularly from monomers comprising groups that may release formaldehyde like N-methylol acrylamide.

The average particle diameter of the dispersed polymer may, for example, be from 0.05 to 10 µm or from 0.1 to 5 µm. The weight average molecular weight M_{w} of the polymer may, for example, be from 100 000 to 4 000 000 or from 350 000 to 2 000 000.

An aqueous dispersion of a polymer as described above may also be used as a separate component in the adhesive system and not being mixed with the other components until during or shortly before use of the adhesive.

The hardener component may further comprise additives commonly used in the art, for example in a total amount from 0 to 10 wt% or from 0.1 to 5 wt%. Such additives may include fillers like kaolin, chalc, wood flour, coconut meal etc. Other possible additives include, for example, cellulose derivates like carboxymethyl cellulose (CMC) or hydroxyethyl cellulose (HEC). The dry content of the hardener component may, for example, be from 20 to 80 wt% or from 25 to 70 wt%.

A useful hardener component may, for example, comprise at least one acid, acid generating salt or acidic salt as described above, usually dissolved in the aqueous phase, optionally at least one thickener such as polyvinyl alcohol and optionally dispersed polymer particles as described above. Such a hardener component may, for example, comprise from 1 to 25 wt% or from 5 to 20 wt% of acid, acid generating salt or acidic salt and from 20 to 80 wt% or from 35 to 65 of dispersed polymer particles. Examples of useful hardener components include those described in e.g. WO2001/070898.

The MUF resin may comprise some free urea i.e. non-reacted urea, for example from 0,1 to 50 wt% or from 1 to 25 wt% particularly from 2 to 15 wt% urea based on dry resin. However, in addition to the urea in the resin, the adhesive system of the invention preferably comprises no or less than 7 wt% urea, for example less than 5 wt% urea or less than 2 wt% urea, particularly less than 0.5 wt% urea or less than 0.1 wt% urea, based on the total weight of the entire adhesive system.

The adhesive system is also preferably also free from or comprises less than 7 wt% of formaldehyde scavengers other than urea, for example less than 5 wt% scavengers or less than 2 wt% scavengers, particularly less than 0.5 wt% scavengers or less than 0.1 wt% scavengers, based on the total weight of the entire adhesive system. Such formaldehyde scavengers include amino-compounds such as thiourea or amines (incl. primary and secondary amines), ammonia, ammonium salts or hydroxy compounds such as hydroxy functional aromatic compounds like phenols, resorcinol or tannins.

It is particularly preferred that the amount of such formaldehyde scavengers in the hardener component is less than 10 wt% particularly less than 5 wt% or less than 1 wt%.

Various ratios between the components in the adhesive system may be used. The amount of acid, acid generating salt and acidic salt in the adhesive system may, for example, be from 0.1 to 25 wt% or from 5 to 20 wt% of the amount of MUF resin. Further, the weight ratio of dry MUF resin to dry polymer, if present in the adhesive system, may, for example, be from 45:1 to 1:15, particularly from 15:1 to 1:7 or from 5:1 to 1:3.

An adhesive system of the invention may further comprise additives such as polyvinyl alcohol, surfactants, emulsifiers, protective colloids, preservatives, antifoaming agents, viscosity adjusting agents; fillers such as kaolin or natural or synthetic clays, protein, starch, coalescing agents such as at least one of butyl di(ethylene)glycol acetate, diethyleneglycol monobutyl ether, diethyleneglycol monomethyl ether, diethyleneglycol dibensoate, dipropyleneglycol dibensoate, propylenecarbonate and dimethyl esters of glutarate, adipate or succinate, and other additives known to be suitable for use in wood adhesive formulations, including combinations thereof. Such additives may be included in any of the components, such as in at least one of the resin component or the hardener component.

In a method of the invention the resin component and the hardener component of the adhesive system are applied to at least one surface of one or more pieces of a wooden material, either separately or after being mixed shortly before application, for example from 1 second to 8 hours or 5 seconds to 4 hrs before application. When the components are applied separately, they may be applied to the same or to two different surfaces to be joined. After application of the adhesive system, the pieces to be joined are pressed together. The press time depends on the wood based product intended to be produced and may, for example, be from 10 seconds to 48 hrs, particularly from 15 seconds to 36 hrs or from 20 seconds to 24 hrs. Also the temperature of the press depends on the product to be produced and may, for example, be from 0 to 180°C, particularly from 5 to 150°C or from 10 to 140°C.

In certain applications, for example in production of laminated beams or crosswise laminated timber, the press time may, for example, be from 10 seconds to 20 hrs or from 15 seconds to 18 hrs or from 20 seconds to 16 hrs. The temperature of the press may, for example, be from 5 to 100°C or from 10 to 90°C, depending on the temperature of the pieces to be joined as well as the kind of press used. Typical press time at a temperature of the press from 15 to 30°C may, for example, be from 10 min to 4 hrs, particularly from 15 min to 3 hrs or from 20 min to 2 hours, but if the glueline by some means is heated, for example to 70°C, the press time may be reduced, for example to from 10 seconds to 5 min, particularly from 15 seconds to 2 min or from 20 seconds to 1 minute.

Various kinds of presses can be used, such as like cold presses, high frequency presses and Dimter presses.

Some embodiments of a method of the invention comprise applying the adhesive system onto a sheet-like material, and joining it with a further sheet-like material. The term sheet-like material as used herein refers to materials having dimensions in either the length or width directions, or both, that are much greater than the dimension of the material in the thickness direction; exemplary of sheet-like materials include lamellae, boards, veneer, and the like. The number of sheet-like materials that are joined together can, for example, be from 3 to 11 or from 5 to 9.

Some embodiments of the invention comprise applying the adhesive system onto a wooden board material, such as board of solid wood, particle board, fibre board (e.g. MDF or HDF), chip board or oriented strand board, and joining the wooden material with another kind of material such as solid wood, LVL forming an I-joist. A wood based product of the invention may, for instance, be a laminated or veneered material, such as laminated flooring, veneered flooring such as parquet flooring, a veneered furniture material, plywood (including curved plywood), wall panels, roofing panels, window scantling, laminated beams, I joists, Duo-/ trio-beams, Japanese posts, or crosswise laminated timber.

The invention is further illustrated by means of the following non-limiting Example. Unless otherwise stated, parts and percentages refer to parts by weight and percent by weight, respectively.

### Example

Adhesive systems made up of three different resin components (Table 1) and three different hardener components (Table 2) in various combinations were tested.

**Table 1: Resin component compositions**

| | **1** | **2** | **3** |
|---|---|---|---|
| Adhesive type | MUF | MUF | MUF |
| F/NH₂ molar ratio | 0.65 | 0.55 | 0.8 |
| Dry content (wt%) | 66 | 70 | 63 |
| Melamine contents (wt% M/(M+U)) | 38 | 31 | 29 |
| Other additives (thickener defoamer, filler) (wt%) | 1.4 | 1.4 | 1.5 |

**Table 2: Hardener component compositions**

| | **A** | **B** | **C** |
|---|---|---|---|
| Water (wt%) | 65 | 76 | 55.2 |
| PVOH stabilized non-functionalised PVAc, with Tg=42C (wt%) | 17 | | 15 |
| Non-functionalized, fully hydrolysed PVOH (wt%) | 6 | 11 | 4.8 |
| Urea | | | 15 |
| Additives (biocide, defoamer) (wt%) | 0.5 | 0.5 | 0.4 |
| Formic acid (wt%) | 11.5 | 12.5 | 9.6 |

Laminated beam samples were prepared by gluing together five lamellas of pine (285 x 145 mm wide and 30 mm thick) with a moisture content of 11 wt%. The gluing was performed in a cold press under the following conditions: Glue spread 300 g/m², pressure 0.8 MPa, pressing temperature 20±2 °C at various press times (PT) and ratios. Chisel test to determine the fibre tear and delamination according to EN 391-B was performed to evaluate the bonding quality. Acceptable fibre tear should be more than 75% while the delamination should be less than 4% (acc. to EN 391-B). The results are shown in Tables 3 and 4.

The formaldehyde emissions were measured according to JAS MAFF not 1152. To reach emission class F**** for glued laminated beams, an emission of ≤ 0.3 mg/l (average), ≤0.4 mg/l (maximum) is required. The results are shown in Table 5.

**Table 3: Comparison of gluing performance at 100:30**

| **Adhesive system Resin component/ Hardener component** | **Weight Ratio** | **g/m²** | **PT** | **Fibre Tear** | **Delam** |
|---|---|---|---|---|---|
| 1/C | 100:30 | 300 | 2 hrs | 38% | 3%, 2% |
| 1/C | 100:30 | 300 | 3 hrs | 90% | 0%, 0% |
| 1/B | 100:30 | 300 | 2 hrs | 90% | 0%, 0% |
| 1/A | 100:30 | 300 | 2 hrs | 85% | 0%, 0,5% |

It is shown that system 1/C needed 3 hrs press time to meet the performance requirements compared to systems 1/A and 1/B that passed with 2 hrs press time.

**Table 4: Comparison of gluing performance at 100:100 ratio**

| **Adhesive system Resin component/ Hardener component** | **Weight Ratio** | **g/m²** | **PT** | **Fibre Tear** | **Delam** |
|---|---|---|---|---|---|
| 1/A | 100:100 | 300 | 50 min | 85% | 2%, 2% |
| 2/A | 100:100 | 300 | 50 min | 65% | 16%, 12% |
| 2/A | 100:100 | 300 | 60 min | 70% | 6%, 2% |
| 2/A | 100:100 | 300 | 120 min | 100% | 4%, 2% |
| 1/C | 100:100 | 300 | 50 min | 20% | 17%, 22% |
| 1/C | 100:100 | 300 | 60 min | 80% | 12%, 8% |
| 3/A | 100:100 | 300 | 60 min | 95% | 0%, 0,5% |

It appears that system 1/A passed at 50 min press time and system 3/A passed at 65 min press time in comparison to system 2/A that needed 120 min (2 hrs) press time to pass the gluing requirements. System 1/C failed at 60 min press time.

**Table 5: Emission data of the systems**

| **Adhesive system Resin component/ Hardener component** | **Weight Ratio** | **Emission (mg/l)** |
|---|---|---|
| 1/B | 100:30 | **0.3** (0.23, 0.35) |
| 1/C | 100:30 | **0.3** (0.26, 0.27) |
| 1/A | 100:30 | **0.3** (0.31, 0.34) |
| 2/A | 100:100 | **0.3** (0.26, 0.26) |
| 3/A | 100:100 | **0.6** (0,64 0,46) |

It appears that all systems except 3/A passed the emission standard F****.

The overall results show that 1/A is a fast and low formaldehyde emitting system while 3/A is fast but with high emission. System 2/A has low formaldehyde emission but requires long press time. Also system 1/C is slow. Systems 1/A and 1/B were the only ones giving both fast press time and low formaldehyde emission.

## Claims

1. Adhesive system comprising
(a) a resin component comprising a melamine-urea-formaldehyde resin in which the amount of melamine expressed as M/(M+U) is from 30 to 60 wt% and the F/NH₂ molar ratio from 0.6 to 0.79; and,
(b) a hardener component comprising at least one acid, acid generating salt or acidic salt and being free from or comprising less than 15 wt% urea.

2. Adhesive system as claimed in claim 1, wherein the F/NH₂ molar ratio of the melamine-urea-formaldehyde resin is from 0.65 to 0.75.

3. Adhesive system as claimed in any one of the claims 1-2, wherein the hardener component comprises no or less than 5 wt% urea.

4. Adhesive system as claimed in any one of the claims 1-3, wherein the adhesive system, in addition to any urea present in the melamine-urea-formaldehyde resin, comprises no or less than 0.5 wt% urea, based on the total weight of the entire adhesive system.

5. Adhesive system as claimed in any one of the claims 1-4, wherein the hardener component is free from or comprises less than 15 wt% of formaldehyde scavengers other than urea.

6. Adhesive system as claimed in any one of the claims 1-5 wherein the hardener component further comprises dispersed polymer particles.

7. Adhesive system as claimed in claim 6, wherein the dispersed polymer particles comprise at least one homo- or co-polymer made from ethylenically unsaturated monomers.

8. Adhesive system as claimed in claim 7, wherein the dispersed polymer particles comprise homo or co-polymer of vinyl acetate.

9. Adhesive system as claimed in any one of the claims 1-8, wherein the hardener component comprises polyvinyl alcohol.

10. Adhesive system as claimed in any one of the claims 1-9, wherein the hardener component comprises at least one carboxylic acid.

11. Adhesive system as claimed in claim 10, wherein said carboxylic acid is formic acid.

12. A method of producing a wood based product, comprising applying an adhesive system according to any one of the claims 1-11 onto at least one surface of one or more pieces of a wooden material, joining the one or more pieces with one or more further pieces of a material and pressing the pieces together.

13. Wood based product obtainable by the method according to claim 12.

14. Use of an adhesive system according to any one of the claims 1-11 for joining one or more pieces of a wooden material with one or more further pieces of a material.

## Patentansprüche

1. Haftsystem umfassend
(a) eine Harzkomponente umfassend ein Melamin-Harnstoff-Formaldeyd-Harz, bei der die Melaminmenge, ausgedrückt als M/(M+U) von 30 bis 60 Gew.% beträgt, und das F/NH₂-Molverhältnis von 0,6 bis 0,79 beträgt; und
(b) eine Härterkomponente umfassend mindestens eine Säure, ein säureerzeugendes Salz oder ein säurereiches Salz, die frei ist von Harnstoff oder weniger als 15 Gew.% Harnstoff umfasst.

2. Haftsystem nach Anspruch 1, wobei das F/NH₂-Molverhältnis des Melamin-Harnstoff-Formaldehyd-Harzes von 0,65 bis 0,75 beträgt.

3. Haftsystem nach einem der Ansprüche 1-2, wobei die Härterkomponente keinen Harnstoff oder weniger als 5 Gew.% Harnstoff umfasst.

4. Haftsystem nach einem der Ansprüche 1-3, wobei das Haftsystem, zusätzlich zu Harnstoff, der in dem Melamin-Harnstoff-Formaldehyd-Harz vorhanden ist, keinen Harnstoff oder weniger als 0,5 Gew.% Harnstoff umfasst, basierend auf dem Gesamtgewicht des gesamten Haftsystems.

5. Haftsystem nach einem der Ansprüche 1-4, wobei die Härterkomponente frei ist von anderen Formaldehydfängern als Harnstoff oder weniger als 15 Gew.% davon umfasst.

6. Haftsystem nach einem der Ansprüche 1-5, wobei die Härterkomponente weiterhin dispergierte Polymerpartikel umfasst.

7. Haftsystem nach Anspruch 6, wobei die dispergierten Polymerpartikel mindestens ein Homo- oder Copolymer umfassen, das aus ethylenisch ungesättigten Monomeren hergestellt ist.

8. Haftsystem nach Anspruch 7, wobei die dispergierten Polymerpartikel ein Homo- oder Copolymer von Vinylacetat umfassen.

9. Haftsystem nach einem der Ansprüche 1-8, wobei die Härterkomponente Polyvinylalkohol umfasst.

10. Haftsystem nach einem der Ansprüche 1-9, wobei die Härterkomponente mindestens eine Carbonsäure umfasst.

11. Haftsystem nach Anspruch 10, wobei die Carbonsäure Ameisensäure ist.

12. Verfahren zur Herstellung eines holzbasierten Produktes umfassend das Aufbringen eines Haftsystems nach einem der Ansprüche 1-11 auf mindestens eine Oberfläche eines oder mehrerer Stücke aus einem Holzwerkstoff, das Zusammenfügen des einen oder der mehreren Stücke mit einem oder mehreren weiteren Stücken eines Materials und Zusammenpressen der Stücke.

13. Holzbasiertes Produkt, erhältlich durch das Verfahren nach Anspruch 12.

14. Verwendung eines Haftsystems nach einem der Ansprüche 1-11 zum Zusammenfügen eines oder mehrerer Stücke aus einem Holzwerkstoff mit einem oder mehreren weiteren Stücken aus einem Material.

## Revendications

1. Système d'adhésif comprenant
(a) un composant résineux comprenant une résine mélamine-urée-formaldéhyde dans laquelle la quantité de mélamine exprimée par M/(M+U) est de 30 à 60% en poids et le rapport molaire F/NH₂ est de 0,6 à 0,79 ; et,
(b) un composant durcisseur comprenant au moins un acide, un sel générateur d'acide ou un sel acide et étant exempt d'urée ou comprenant moins de 15% en poids d'urée.

2. Système d'adhésif tel que revendiqué dans la revendication 1, dans lequel le rapport molaire F/NH₂ de la résine mélamine-urée-formaldéhyde est de 0,65 à 0,75.

3. Système d'adhésif tel que revendiqué dans l'une quelconque des revendications 1 et 2, dans lequel le composant durcisseur comprend moins de 5% en poids d'urée ou n'en comprend pas du tout.

4. Système d'adhésif tel que revendiqué dans l'une quelconque des revendications 1 à 3, dans lequel le système d'adhésif, en plus de toute urée présente dans la résine mélamine-urée-formaldéhyde, comprend moins de 0,5% en poids d'urée ou n'en comprend pas du tout, par rapport au poids total de tout le système d'adhésif.

5. Système d'adhésif tel que revendiqué dans l'une quelconque des revendications 1 à 4, dans lequel le composant durcisseur est exempt de capteurs de formaldéhyde autres que l'urée ou comprend moins de 15% en poids de ceux-ci.

6. Système d'adhésif tel que revendiqué dans l'une quelconque des revendications 1 à 5, dans lequel le composant durcisseur comprend en outre des particules de polymère dispersées.

7. Système d'adhésif tel que revendiqué dans la revendication 6, dans lequel les particules de polymère dispersées comprennent au moins un homopolymère ou un copolymère obtenu à partir de monomères éthyléniquement insaturés.

8. Système d'adhésif tel que revendiqué dans la revendication 7, dans lequel les particules de polymère dispersées comprennent un homopolymère ou un copolymère d'acétate de vinyle.

9. Système d'adhésif tel que revendiqué dans l'une quelconque des revendications 1 à 8, dans lequel le composant durcisseur comprend de l'alcool polyvinylique.

10. Système d'adhésif tel que revendiqué dans l'une quelconque des revendications 1 à 9, dans lequel le composant durcisseur comprend au moins un acide carboxylique.

11. Système d'adhésif tel que revendiqué dans la revendication 10, dans lequel ledit acide carboxylique est l'acide formique.

12. Procédé de production d'un produit à base de bois, comprenant le fait d'appliquer un système d'adhésif selon l'une quelconque des revendications 1 à 11 sur au moins une surface d'un ou de plusieurs morceau(x) d'un matériau en bois, d'assembler le ou les plusieurs morceau(x) avec un ou plusieurs morceau(x) supplémentaire(s) d'un matériau et de presser les morceaux ensemble.

13. Produit à base de bois pouvant être obtenu par le procédé selon la revendication 12.

14. Utilisation d'un système d'adhésif selon l'une quelconque des revendications 1 à 11 pour assembler un ou plusieurs morceau(x) d'un matériau en bois avec un ou plusieurs morceau(x) supplémentaire(s) d'un matériau.
